# EUROPEAN PATENT APPLICATION

(11) **EP 4 366 092 A1**
(43) Date of publication of application: **08.05.2024**
(21) Application number: 23207460.9
(22) Date of filing: 02.11.2023
(51) Int. Cl.: H01R 4/64, H01R 13/6583, H01R 13/6596, H01R 4/34, H01R 13/74, H01R 13/52, H01R 13/53

(54) **SHIELDED ELECTRICAL ASSEMBLY CONNECTOR FOR AN ASSEMBLY OF A VEHICLE**

(30) Priority: 03.11.2022 DE 102022129113
(71) Applicant: TE Connectivity Germany GmbH, 64625 Bensheim (DE)
(72) Inventor: LÜLLICH, Eike Tim, 64625 Bensheim (DE)
(74) Representative: Patentanwaltskanzlei WILHELM & BECK

(57) **Abstract**

The invention relates to an electrical high-current and/or high-voltage assembly connector (1) for an assembly (0) of a vehicle, particularly an electrical energy storage device (0) of an electric vehicle, the assembly connector (1) on the one hand being structured in such a manner that it can be or is installed on and in an assembly wall (5); and the assembly connector (1) on the other hand being formed in such a manner that in the installed state on and in the assembly wall (5), a connector shield (100) of the assembly connector (1) is electrically conductively connected to the assembly wall (5), and the electrically conductive connection of the connector shield (100) to an electrically conductive layer of the assembly wall (5) takes place by means of an electrically conductive shield contact adapter (20) of the assembly connector (1).

## Description

The invention relates to an electrical high-current and/or high-voltage assembly connector for an assembly of a vehicle, particularly an electrical energy storage device of an electric vehicle. Furthermore, the invention relates to a power-electrical assembly for a vehicle, particularly an electrical energy storage device for an electric vehicle and a vehicle, an electric vehicle in particular.

In the electrical sector (electrics, electrical engineering, electrical power engineering etc.) beyond ground-based electrical power engineering and its analogues, a large number of electrical connectors are known which serve the purpose of transmitting electrical currents and voltages in the high-current and/or high-voltage range. In this case, the connectors, for example for a supply and/or a distribution of electrical energy in warm, possibly hot, contaminated, humid and/or chemically aggressive environments, in the short term and/or permanently ensure problem-free transmission of electrical energy. Owing to a wide range of applications, a large number of such line connectors are known in the non-automotive sector and in the automotive sector.

Such electrical high-current and/or high-voltage connectors can be installed, for example, on/in a power-electrical assembly, for example a (traction) battery or a battery module, an inverter, a switchgear assembly etc. - High fuel costs and efforts to reduce environmental impacts make, for example in the automotive sector, hybrid or electric vehicles necessary. One aspect of these vehicles is handling of high electrical charging and/or operating currents and/or voltages, wherein relevant components of the assemblies of the vehicles must be designed correspondingly. This relates for example to high-current lines or high-voltage lines (e.g. a stranded line, conductor bar, busbar, etc. consisting of copper or aluminium) and contact devices (e.g. terminal fitting, flat contact, busbar etc. consisting of copper or aluminium) of the connectors.

For internally electrically contacting an electrical high-current and/or high-voltage connector of a power-electrical assembly, power-electromechanical screw contact connections can be used, which also meet stringent requirements. A mechanical path can be functionally separated from an electrical path by means of such a high-current and/or high-voltage screw contact connection. The mechanical path serves to transmit the mechanical tensile stresses of a screw fitting, in particular a steel-steel screw fitting, and the electrical path is used as a low-resistance electrical contact connection, in particular a copper-copper connection, of the screw contact connection.

As a result, a robust and, in the typical manufacturing environment, easily handleable electrical high-current and/or high-voltage screw contact connection is provided. In addition, such a screw contact connection is easily separable (diagnosis, recycling) and at the same time safe to touch. Such screw contact connections can be used in a variety of ways and flexibly for making contact with battery modules and for other connection points in various termination panels of an electrical power architecture. - Efforts are continually being made to improve electrical high-current and/or high-voltage connectors, in particular to design them to be more effective and to make them cost-effective in the process. It is therefore an object of the invention to specify an improved electrical high-current and/or high-voltage connector for an assembly of a vehicle, particularly an electric vehicle.

The object of the invention is achieved by means of an electrical high-current and/or high-voltage assembly connector (below merely: assembly connector) for an assembly of a vehicle, particularly an electrical energy storage device of an electric vehicle; by means of a power-electrical assembly for a vehicle, particularly an electrical energy storage device for an electric vehicle; and by means of a vehicle, particularly an electric vehicle. - Advantageous developments, additional features and/or advantages of the invention can be gleaned from the dependent claims and the following description.

The assembly connector, which is formed e.g. as a header, is on the one hand structured in such a manner that it can be or is installed on and in an assembly wall. On the other hand, the assembly connector is formed in such a manner that in the installed state on and in the assembly wall, a connector shield of the assembly connector is electrically conductively connected to the assembly wall, wherein the electrically conductive connection of the connector shield to an electrically conductive layer of the assembly wall takes place by means of an electrically conductive shield contact adapter of the assembly connector.

That is to say that the electrically conductive connection of the shield to the assembly wall does not take place directly, but rather indirectly via the shield contact adapter. And it should of course be clear from the term 'adapter' that this is an intentional, predetermined physical configuration of a component and not a shape which is assumed owing to real-world conditions, such as e.g. that of a coating or its analogues.

The electrically conductive connection of the connector shield to the electrically conductive layer of the assembly wall in the installed state of the assembly connector on and in the assembly wall may on the one hand be formed as a direct electrical contact of the connector shield with the shield contact adapter and/or may on the other hand be formed as a direct or indirect electrical contact of the shield contact adapter with the electrically conductive layer of the assembly wall.

The direct electrical contact of the connector shield with the shield contact adapter may be formed as an electrical plug-in connection, an electrical contact connection and/or an electrical spring connection. Here, at least one contact partner of the electrical contact may be formed as an electrical spring contact. Furthermore, the direct electrical contact can be produced by means of an electrical contact lug of the connector shield or the shield contact adapter. Furthermore, the direct electrical contact can be produced by means of a spring contact lug of the connector shield and a radial inner side or outer side of the connector shield.

The direct electrical contact of the shield contact adapter with the electrically conductive layer of the assembly wall can be produced by means of coating opening devices on the shield contact adapter. Such coating opening devices may be e.g. cutting devices, tearing devices or breaking devices, such as e.g. blades, edges, corrugations, shoulders, etc., by means of which a coating of the assembly wall can be opened as far as its electrically conductive layer. Alternatively or additionally, the direct electrical contact of the shield contact adapter with the electrically conductive layer of the assembly wall can be formed as an electrical plug-in connection, an electrical surface connection and/or an electrical press-fit connection.

The indirect electrical contact of the shield contact adapter with the electrically conductive layer of the assembly wall can be produced by means of a fastening means, which fastens the shield contact adapter to the assembly wall.

For the electrically conductive connection of the connector shield via the shield contact adapter to the electrically conductive layer of the assembly wall in the installed state of the assembly connector on and in the assembly wall, a substantially peripheral electrical peripheral contact can be formed in the peripheral direction of the assembly connector between the connector shield and the shield contact adapter, wherein the peripheral contact is preferably formed as an intermittent electrical contact with a multiplicity of individual electrical contacts.

For the electrically conductive connection of the connector shield via the shield contact adapter to the electrically conductive layer of the assembly wall in the installed state of the assembly connector on and in the assembly wall, electrical axial contacts can be arranged between the shield contact adapter and the electrically conductive layer of the assembly wall in the axial direction of the assembly connector, wherein the axial contacts are preferably formed as a multiplicity of axial pressing areas (points, sections) and/or as a plurality of hollow cylindrical contacts (flat, corrugated or serrated boundary surfaces) running in the axial direction. - Here (cf. also above), a plurality is preferably smaller than a multiplicity.

In the installed state of the assembly connector on and in the assembly wall, the shield contact adapter can be mounted on an inner side of the assembly wall. That is to say, the shield contact adapter is or can be installed internally in the assembly. Furthermore, in the installed state, a section of the assembly connector on the inner side of the assembly can extend through the shield contact adapter or a section of the assembly connector on the inner side of the assembly can be arranged in the shield contact adapter at least in axial sections. Furthermore, in the installed state, a section of the assembly connector on the outer side of the assembly can be mounted on an outer side of the assembly wall.

If the shield contact adapter is rather formed as a ring-shaped shield contact adapter (cf. below), then the section on the inner side of the assembly may extend through the connection through-cutout. And if the shield contact adapter is rather formed as an apron-like shield contact adapter (cf. likewise below), then the section on the inner side of the assembly may extend through the connection through-cutout or be arranged in the connection through-cutout at least in axial sections.

The shield contact adapter may comprise a plate-shaped base, via which the shield contact adapter can be or is fastened on the assembly wall. Furthermore, the shield contact adapter can be formed as a ring-shaped or apron-like shield contact adapter which is substantially closed in the peripheral direction. Furthermore, the shield contact adapter may comprise a connection through-cutout, in which the section of the assembly connector on the inner side of the assembly can be or is arranged.

The shield contact adapter may comprise a centring ring, which projects in the axial direction, for arranging the shield contact adapter in a connector through-cutout in the assembly wall. Furthermore, the shield contact adapter may comprise a peripheral wall, which projects in the axial direction and is completely peripheral and closed for preventing the penetration of a liquid into the interior of the shield contact adapter. The centring ring and the peripheral wall can be arranged in the shield contact adapter flush in the axial direction. Furthermore, the peripheral wall may comprise a greater extent in the axial direction than the centring ring.

In the installed state of the assembly connector on and in the assembly wall, the shield contact adapter can be fastened to the assembly wall by means of a fastening means. In particular, the fastening means can be formed as a screw or a rivet, particularly an SPR rivet (self-piercing rivet). The fastening means can in this case penetrate the assembly wall and be securely arranged in a housing of the assembly connector. The housing can be formed as an outer housing of the section of the assembly connector on the outer side of the assembly.

In the installed state of the assembly connector on and in the assembly wall, the shield contact adapter can be arranged around the connector through-cutout in a liquid-tight manner with respect to the assembly wall. This may take place by pressing the shield contact adapter onto the assembly wall. Furthermore, a sealing material, a seal, etc. may alternatively or additionally be used.

The shield contact adapter can be formed as a shield contact adapter of a multipolar, particularly a bipolar, assembly connector. Furthermore, the shield contact adapter may, for each contact means of the assembly connector, comprise an elongate receiving area for the contact means. Furthermore, in a cross section of the connection through-cutout, receiving areas for the contact means, which are directly adjacent to one another, may comprise a constriction between them.

The shield contact adapter is preferably formed as a three-dimensionally structured component. Furthermore, the shield contact adapter can be formed as a shield contact adapter which can be mounted and demounted again. Furthermore, the shield contact adapter can be formed as a die-cast part, particularly an aluminium die-cast part, a deep-drawn part or formed by a different method.

The assembly connector is preferably formed as an assembly connector device. Furthermore, the electrically conductive layer of the assembly wall may comprise a coating of the assembly wall. Here, the coating may be configured to be electrically conductive or electrically non-conductive. The coating may be configured as a vehicle floor coating and in particular as a CDC coating (CDC: cathodic dip coating). Furthermore, the assembly wall can be formed as an assembly base wall.

The power-electrical assembly according to the invention, particularly the electrical energy storage device, comprises an assembly connector according to the invention on and in an assembly wall of the assembly. An assembly of this type can e.g. further be formed as an electric motor, an electric traction motor, an inverter, a switchgear assembly, etc., particularly for a vehicle. Furthermore, the energy storage device can be formed as a (traction) battery, a rechargeable battery, etc. Furthermore, the invention can be used for example where walls made from sheet metal and/or aluminium die-cast parts can be used.

The vehicle according to the invention comprises a power-electrical assembly according to the invention. A vehicle is preferably understood to mean a motor vehicle and in particular a road vehicle, but may also be understood to mean a rail vehicle, a watercraft and/or an aircraft. Furthermore, an electric vehicle is understood to mean a vehicle with an electric traction motor, which in addition to its electric traction motor may comprise a further non-electric drive, such as e.g. an internal combustion engine. In other words, a vehicle with an electric traction motor can be understood to mean, for example, a hybrid electric vehicle, an electric vehicle (electromotive drive only), a fuel cell vehicle, etc.

The invention is explained in greater detail below on the basis of exemplary embodiments with reference to the appended schematic drawings which are not to scale. Sections, elements, component parts, units, components and/or patterns which have an identical, unique or analogous configuration and/or function are identified by the same reference symbols in the description of the figures (see below), the list of reference symbols, the patent claims and in the figures (Figs) of the drawings. A possible alternative which is not explained in the description of the invention (see above), is not illustrated in the drawings and/or is not definitive, a static and/or kinematic reversal, a combination etc. with respect to the exemplary embodiments of the invention or a component, a pattern, a unit, a component part, an element or a section thereof, can further be gleaned from the list of reference symbols and/or the description of the figures.

In the case of the invention, a feature (portion, element, component part, unit, component, function, variable etc.) can be of positive configuration, that is to say present, or of negative configuration, that is to say absent. In this specification (description (description of the invention (see above), description of the figures (see below)), list of reference symbols, patent claims, drawings), a negative feature is not explained explicitly as a feature if value is not placed on it being absent according to the invention. That is to say, the invention which is actually made and is not constructed by way of the prior art consists in omitting the said feature.

A feature of this specification can be used not only in a specified manner and/or way, but rather also in another manner and/or way (isolation, combination, replacement, addition, on its own, omission, etc.). In particular, it is possible, in the description, the list of reference symbols, the patent claims and/or the drawings, to replace, add or omit a feature in the patent claims and/or the description on the basis of a reference symbol and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalized inventive concept. The absence of a feature (negative feature) in an exemplary embodiment shows that the feature is optional in relation to the invention. In addition, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary figures (Figs):
Figs 1 and 2 show a perspective inner plan view (Fig. 1) and a perspective sectional view (Fig. 2) of an assembly connector with a shield contact adapter, which is installed on and in an assembly wall of an assembly of a vehicle,
Figs 3 and 4 show an assembled assembly connector without its shield contact adapter (Fig. 3) and a connector shield of the assembly connector alone (Fig. 4) in perspective views,
Figs 5 and 6 show in 2D sectional views which are broken away on all sides, two embodiments of the installed assembly connector in the region of its electrically conductive connections between the connector shield and an electrically conductive layer of the assembly wall, and
Figs 7 and 8 show an apron-like shield contact adapter (Fig. 7) and a ring-shaped shield contact adapter (Fig. 8) for the assembly connector in perspective views, alone in each case.

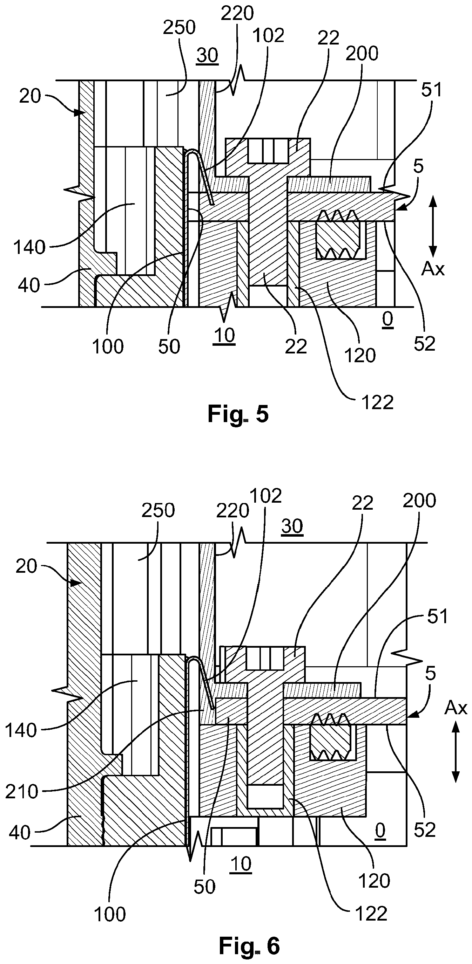

The invention is explained in more detail in the following with reference to exemplary embodiments of three embodiments (e.g. illustrated in Figs 5, 7 and 8) of a variant of an electrical high-current and/or high-voltage assembly connector 1, which is formed as a header 1 (only termed assembly connector 1 in the following) incl. a shield contact adapter 20 for it, for an assembly 0 of a vehicle, particularly an electrical energy storage device 0 of an electric vehicle.

The invention can be used in general in the electrical sector for an electrical assembly. One exception is formed here by terrestrial electrical power engineering and analogues. Moreover, although the invention is described and illustrated further in greater detail by way of preferred exemplary embodiments, the invention is not restricted by the disclosed exemplary embodiments, but rather is of more fundamental nature. Other variations can be derived therefrom and/or from the above (description of the invention) without departing from the scope of protection of the invention.

The drawings show only those physical sections of a subject matter of the invention which are necessary for understanding the invention. Designations such as connector and mating connector, contact means and mating contact means, etc. are to be interpreted synonymously, that is to say they are possibly interchangeable in each case. In the following, the explanation of the invention with reference to the drawing relates to an axial direction Ax, a radial direction Ra and a peripheral direction Um of the assembly connector 1 and the shield contact adapter 20 thereof.

A floor panel (cf. the assembly wall 5 in the following) of a vehicle is protected with a coating, often a CDC coating, from stone impact, which makes an electrical shield contact of the floor panel considerably more difficult in the case of an electrical connector (cf. the assembly connector 1 in the following) on/in the floor panel. In order to solve this problem, masking of the sub-floor panel may be used for the coating. Such masking is expensive however and leads to corrosion problems of the sub-floor panel.

Furthermore, of course depending on the assembly 0, in such connectors without protection, water can get into an electrical connection system with which the connector is associated. That is to say additional sealing is required for protection from standing water. Furthermore, CDC sheet metal screws generate metal dust which is created during mounting/demounting of the connector and may lead to large problems in an electrical connector. - According to the invention, these problems are solved using the shield contact adapter 20 of the assembly connector 1.

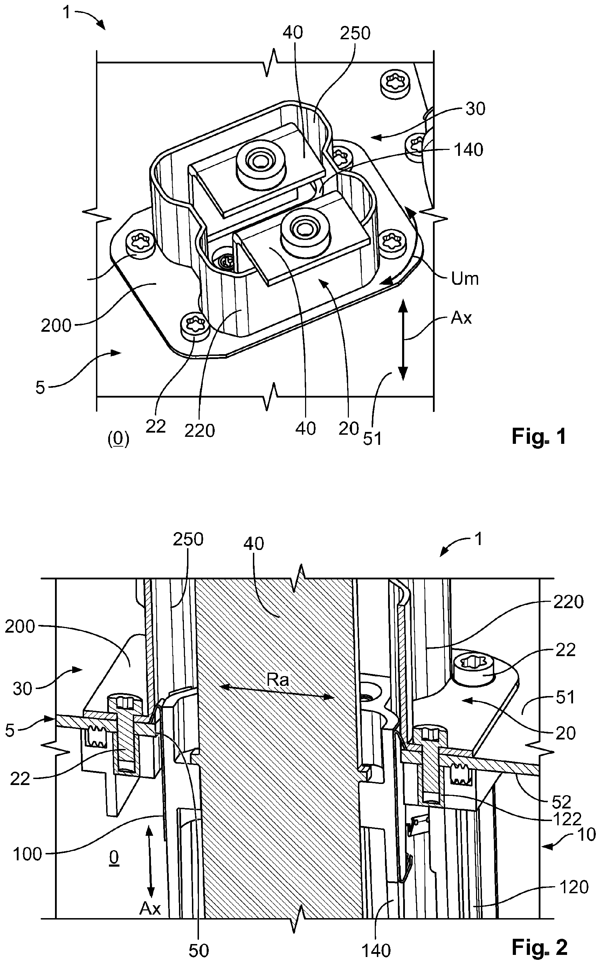

Figs 1 and 2 show the assembly connector 1 installed on and in an assembly wall 5. Here, the assembly connector 1 is installed both internally in (cf. Fig. 1) and externally on (cf. Figs 1 and 2) the assembly 0, wherein the assembly connector 1 extends through a connector through-cutout 50 in the assembly wall 5. That is to say on the one hand a section 30 of the assembly connector 1 on the inner side of the assembly is arranged on an inner side 51 of the assembly wall 5 internally in the assembly 0, and on the other hand a section 10 of the assembly connector 1 on the outer side of the assembly is arranged on an outer side 52 of the assembly wall 5 externally on the assembly 0.

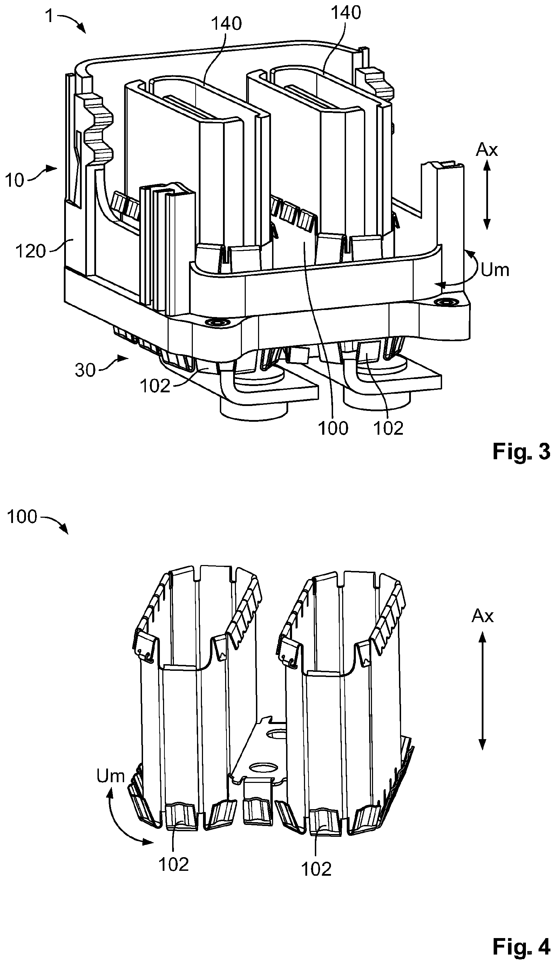

The assembly connector 1 leads in the present case from the outside inwardly into the assembly 0 or vice versa, wherein other configurations, e.g. completely internally in an assembly, are of course likewise possible. Only the assembly connector 1 can be or is installed on and in the assembly wall 5. - The assembly connector 1 (cf. also Figs 3, 5 and 6) comprises a housing 120 or an outer housing 120 substantially in the section 10 on the outer side of the assembly, in which housing or outer housing contact-means receptacles 140 can be arranged in accordance with a number of electrical contact means 40 of the assembly connector 1. Here, the contact-means receptacles 140 of an individual assembly connector 1 can be formed together in one piece and in particular integrally or in multiple pieces.

In the mounted state of the assembly connector 1 (cf. in particular Fig. 2) a contact means 40 is arranged, possibly in a sealed manner, in the relevant contact-means receptacle 140, which contact means is in turn secured by the contact-means receptacle 140 or is fastened in the same. The contact-means receptacles 140 are for their part arranged, possibly in a sealed manner, in the housing 120 or outer housing 120 and are secured by the same or are fastened in the same.

A connector shield 100 (cf. also Fig. 4), which is formed materially in one piece or integrally externally in the radial direction Ra, is provided on the contact-means receptacles 140, which connector shield extends from the section 10 of the assembly connector 1 on the outer side of the assembly through the connector through-cutout 50 to the section 30 of the assembly connector 1 on the inner side of the assembly or vice versa. In the section 10 on the outer side of the assembly, the connector shield 100 can be contacted electrically by a shield of an electrical conductor (cable, busbar, etc.) which can be connected to the assembly connector 1 there. For this, the connector shield 100 can comprise electrical contact lugs, particularly spring contact lugs.

In the present case, the connector shield 100 comprises a shield contact sleeve for each contact means 40, which runs around the same completely in the peripheral direction thereof. A shape of the shield contact sleeve is adapted to a shape of the contact means 40 in this case. The illustrated connector shield 100 comprises two such shield contact sleeves, which are arranged substantially parallel to one another, which shield contact sleeves are preferably integrally connected to one another via a web. The web can be formed in such a manner (through-cutouts) that the connector shield 100 can be secured or fastened in the assembly connector 1 therewith.

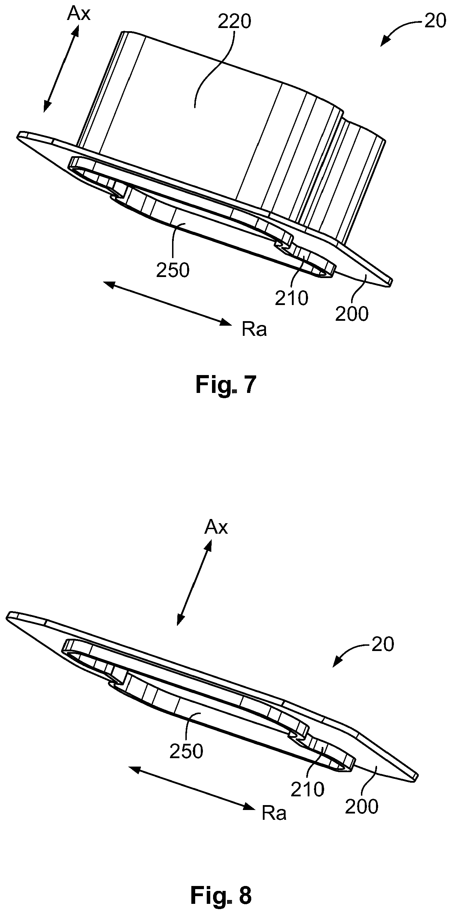

Internally in the assembly 0, the electrical shield ends or the electrical shield of the assembly connector 1 requires an electrical connection to an assembly wall 5, which is possibly coated in an electrically insulated manner. Here, in the section 30 on the inner side of the assembly, the connector shield 100 is electrically directly contacted by the shield contact adapter 20 (cf. in particular also Figs 7 and 8), which for its part is in direct or indirect electrical contact with an electrically conductive layer of the assembly wall 5.

The direct electrical contact of the connector shield 100 with the shield contact adapter 20 takes place by means of electrical contact lugs 102 of the connector shield 100, which are formed as spring contact lugs 102 in particular. It is of course alternatively or also additionally possible, analogously to provide contact lugs or spring contact lugs on the shield contact adapter 20 (not illustrated). In the present case, the connector shield 100 and the shield contact adapter 20 are formed and arranged in the assembly connector 1 in such a manner that the contact lugs 102 of the connector shield 100 electrically contact the shield contact adapter 20 on a radial Ra inner side of the shield contact adapter 20 (cf. Figs 2, 5 and 6).

For the direct electrical contact of the shield contact adapter 20 with the assembly wall 5, the shield contact adapter 20 may comprise coating opening devices (not illustrated), by means of which a coating of the assembly wall 5 can be opened. As a result, the electrically conductive layer of the assembly wall 5 can be electrically contacted by the shield contact adapter 20 (axial pressing areas, cf. above).

Alternatively or additionally, the indirect electrical contact of the shield contact adapter 20 with the assembly wall 5 or the electrically conductive layer thereof can be produced via at least one fastening means 22 (cf. Figs 5 and 6) of the shield contact adapter 20 (hollow cylindrical contacts, cf. above). Here, the shield contact adapter 20 is fastened by means of the fastening means 22 to the assembly wall 5. Such a fastening means 22 can be formed e.g. as a rivet, particularly an SPR rivet, a screw, etc.

Furthermore, alternatively or additionally, an indirect electrical contact of the shield contact adapter 20 with the assembly wall 5 can be produced via a mounting bush 122 of the housing 120 or outer housing 120. That is to say, the shield contact adapter 20 contacts the fastening means 22, the fastening means 22 contacts the mounting bush 122 and the mounting bush 122 contacts the assembly wall 5 electrically in each case.

The illustrated shield contact adapter 20 (cf. Figs 7 and 8 in particular) comprises at least one plate-shaped base 200, by means of which it can be fastened to the assembly wall 5 by means of the fastening means 22 (cf. Figs 5 and 6 in particular). Furthermore, the shield contact adapter 20 comprises a connection through-cutout 250, in which the section 30 of the assembly connector 1 on the inner side of the assembly can be or is provided. This represents a basic embodiment of the shield contact adapter 20 (cf. Fig. 8 without centring ring 210).

In the installed state of the assembly connector 1 on and in the assembly wall 5, the spring contact lugs 102 of the connector shield 100 contact the shield contact adapter 20 in the radial direction Ra internally in the shield contact adapter 20, that is to say internally in the connection through-cutout 250. The spring contact lugs 102 of the connector shield 100 deflect in the radial direction Ra in this case. Here, a contact region runs internally around the connection through-cutout 250 in the peripheral direction Um substantially completely, as a result of which an electrical peripheral contact is formed.

For simple mounting of the shield contact adapter 20 on/over the connector through-cutout 50 on the assembly wall 5, the shield contact adapter 20 may comprise a centring ring 210 or a functionally identical device, which can be fitted into the connector through-cutout 50 in a form-fitting manner at least in sections. The centring ring 210 or the functionally identical device projects in this case somewhat in the axial direction Ax from the plate-shaped base 200 and runs preferably completely around the plate-shaped base 200 in the peripheral direction Um. Radially Ra internally, the centring ring 210 or the functionally identical device also constitutes the connection through-cutout 250.

Furthermore, the shield contact adapter 20 may comprise a peripheral wall 220, which - if the centring ring 210 is present - is arranged on the side of the plate-shaped base 200 opposite the same. This apron makes it possible that, in the case of a liquid-tight connection between the assembly wall 5 and the shield contact adapter 20, no water or a different liquid located on the assembly wall 5 can make it radially internally into the shield contact adapter 20 and from there into the assembly connector 1. The peripheral wall 220 projects in this case in the axial direction Ax from the plate-shaped base 200 and runs completely around the plate-shaped base 200 in the peripheral direction Um. Radially Ra internally, the peripheral wall 220 also constitutes the connection through-cutout 250.

If both the centring ring 210 and the peripheral wall 220 are arranged on the mutually opposite large-area sides of the plate-shaped base 200, then the same may be flush in the axial direction Ax or not. If appropriate, the peripheral wall 220 may comprise a somewhat larger or a somewhat smaller perimeter than the centring ring 210. - Here, the shield contact adapter 20 is formed as a closed apron-like (cf. Fig. 7) or closed ring-shaped (cf. Fig. 8) three-dimensionally structured component.

The shield contact adapter 20 can be formed for a single assembly connector 1 or for a plurality of assembly connectors 1, e.g. two assembly connectors 1. In the second case, the shield contact adapters 20 for the plurality of assembly connectors 1 can be combined to form a combined shield contact adapter plate (not illustrated). That is to say these shield contact adapters 20 share a single plate-shaped base 200, which comprises a corresponding number of connection through-cutouts 250 and possibly a corresponding number of centring rings 210 and/or peripheral walls 220. Here, it is possible to provide only one single centring ring 210.

The integration of the shield contact adapter 20 into the assembly connector 1 leads to an electrically radially Ra contactable surface for the connector shield 100 or the contact lugs 102 thereof. Here, the connector shield 100 can remain the same, i.e. a connector shield 100, which has previously electrically contacted an assembly wall, then contacts the shield contact adapter 20. The shield contact adapter 20 may be a component consisting of die-cast aluminium in particular. In addition, the shield contact adapter 20 can be configured as protection from water, particularly standing water, e.g. in the case of a leak. The mechanical and possibly also the electrical connection between the shield contact adapter 20 and the assembly wall 5 can be realized with the technology which a user already uses.

## Claims

1. Electrical high-current and/or high-voltage assembly connector (1) for an assembly (0) of a vehicle, particularly an electrical energy storage device (0) of an electric vehicle,
the assembly connector (1) on the one hand being structured in such a manner that it can be or is installed on and in an assembly wall (5); and the assembly connector (1) on the other hand being formed in such a manner that in the installed state on and in the assembly wall (5), a connector shield (100) of the assembly connector (1) is electrically conductively connected to the assembly wall (5), **characterized in that**
the electrically conductive connection of the connector shield (100) to an electrically conductive layer of the assembly wall (5) takes place by means of an electrically conductive shield contact adapter (20) of the assembly connector (1).

2. Electrical high-current and/or high-voltage assembly connector (1) according to the preceding claim, **characterized in that** the electrically conductive connection of the connector shield (100) to the electrically conductive layer of the assembly wall (5) in the installed state of the assembly connector (1) on and in the assembly wall (5),
is on the one hand formed as a direct electrical contact of the connector shield (100) with the shield contact adapter (20) and is on the other hand formed as a direct or indirect electrical contact of the shield contact adapter (20) with the electrically conductive layer of the assembly wall (5).

3. Electrical high-current and/or high-voltage assembly connector (1) according to either of the preceding claims, **characterized in that** the direct electrical contact of the connector shield (100) to the shield contact adapter (20):
• is formed as an electrical plug-in connection, an electrical contact connection and/or an electrical spring connection,
• is produced by means of an electrical contact lug (102) of the connector shield (100) or the shield contact adapter (20), and/or
• is produced by means of a spring contact lug (102) of the connector shield (100) and a radial (Ra) inner side or outer side of the connector shield (100).

4. Electrical high-current and/or high-voltage assembly connector (1) according to one of the preceding claims, **characterized in that** the direct electrical contact of the shield contact adapter (20) with the electrically conductive layer of the assembly wall (5) is produced by means of coating opening devices on the shield contact adapter (20), or
the indirect electrical contact of the shield contact adapter (20) with the electrically conductive layer of the assembly wall (5) is produced by means of a fastening means (22), which fastens the shield contact adapter (20) to the assembly wall (5).

5. Electrical high-current and/or high-voltage assembly connector (1) according to one of the preceding claims, **characterized in that** for the electrically conductive connection of the connector shield (100) via the shield contact adapter (20) to the electrically conductive layer of the assembly wall (5) in the installed state of the assembly connector (1) on and in the assembly wall (5),
a substantially peripheral electrical peripheral contact is formed in the peripheral direction (Um) of the assembly connector (1) between the connector shield (100) and the shield contact adapter (20), wherein the peripheral contact is preferably formed as an intermittent electrical contact with a multiplicity of individual electrical contacts.

6. Electrical high-current and/or high-voltage assembly connector (1) according to one of the preceding claims, **characterized in that** for the electrically conductive connection of the connector shield (100) via the shield contact adapter (20) to the electrically conductive layer of the assembly wall (5) in the installed state of the assembly connector (1) on and in the assembly wall (5),
electrical axial contacts are arranged between the shield contact adapter (20) and the electrically conductive layer of the assembly wall (5) in the axial direction (Ax) of the assembly connector (1), wherein the axial contacts are preferably formed as a multiplicity of axial pressing areas and/or as a plurality of hollow cylindrical contacts running in the axial direction (Ax).

7. Electrical high-current and/or high-voltage assembly connector (1) according to one of the preceding claims, **characterized in that** in the installed state of the assembly connector (1) on and in the assembly wall (5):
• the shield contact adapter (20) is mounted on an inner side (51) of the assembly wall (5), and/or
• a section (30) of the assembly connector (1) on the inner side of the assembly extends through the shield contact adapter (20), or
• a section (30) of the assembly connector (1) on the inner side of the assembly is arranged in the shield contact adapter (20) at least in axial sections.

8. Electrical high-current and/or high-voltage assembly connector (1) according to one of the preceding claims, **characterized in that** the shield contact adapter (20):
• comprises a plate-shaped base (200), via which the shield contact adapter (20) can be or is fastened on the assembly wall (5),
• is formed as a ring-shaped or apron-like shield contact adapter (20) which is substantially closed in the peripheral direction (Um), and/or
• comprises a connection through-cutout (250), in which the section (30) of the assembly connector (1) on the inner side of the assembly can be or is arranged.

9. Electrical high-current and/or high-voltage assembly connector (1) according to one of the preceding claims, **characterized in that**:
• the shield contact adapter (20) comprises a centring ring (210), which projects in the axial direction (Ax), for arranging the shield contact adapter (20) in a connector through-cutout (50) in the assembly wall (5),
• the shield contact adapter (20) comprises a peripheral wall (220), which projects in the axial direction (Ax) and is completely peripheral and closed in the peripheral direction (Um) for preventing the penetration of a liquid into the interior of the shield contact adapter (20), and/or
• the centring ring (210) and the peripheral wall (220) are arranged in the shield contact adapter (20) flush in the axial direction (Ax).

10. Electrical high-current and/or high-voltage assembly connector (1) according to one of the preceding claims, **characterized in that** in the installed state of the assembly connector (1) on and in the assembly wall (5):
• the shield contact adapter (20) is fastened to the assembly wall (5) by means of a fastening means (22),
• the fastening means (22) penetrates the assembly wall (5) and is securely arranged in a housing (120) of the assembly connector (1), and/or
• the shield contact adapter (20) is arranged around the connector through-cutout (50) in a liquid-tight manner with respect to the assembly wall (5).

11. Electrical high-current and/or high-voltage assembly connector (1) according to one of the preceding claims, **characterized in that** the shield contact adapter (20):
• is formed as a three-dimensionally structured component,
• is formed as a shield contact adapter (20) which can be mounted and demounted again, and/or
• is formed as a die-cast part, particularly a die-cast aluminium part.

12. Electrical high-current and/or high-voltage assembly connector (1) according to one of the preceding claims, **characterized in that**:
• the assembly connector (1) is formed as an assembly connector device (1),
• the electrically conductive layer of the assembly wall (5) comprises a coating of the assembly wall (5), and/or
• the assembly wall (5) is formed as an assembly base wall (5).

13. Power-electrical assembly (0) for a vehicle, particularly an electrical energy storage device (0) for an electric vehicle,
the assembly (0) comprising an assembly connector (1) on and in an assembly wall (5) of the assembly (0), **characterized in that**
the assembly connector (1) is formed according to one of the preceding claims.

14. Vehicle, electric vehicle in particular, having a power-electrical assembly (0), **characterized in that** the assembly (0) is formed according to the preceding claim.
